# EUROPEAN PATENT SPECIFICATION

(11) **EP 1 841 701 B1**
(45) Date of publication and mention of the grant of the patent: **05.08.2015**
(21) Application number: 05821556.7
(22) Date of filing: 29.12.2005
(51) Int. Cl.: C03B 37/05, C03C 25/14

(54) **ARRANGEMENT AND METHOD IN THE MANUFACTURE OF MINERAL WOOL AND FIBERISING APPARATUS**
ANORDNUNG UND VERFAHREN BEI DER HERSTELLUNG VON MINERALWOLLE UND FASERBILDUNGSVORRICHTUNG
AGENCEMENT ET PROCEDE DANS LA FABRICATION DE LAINE MINERALE ET APPAREIL DE DEFIBRAGE

(30) Priority: 31.12.2004 FI 20041700
(43) Date of publication of application: 10.10.2007
(60) Divisional application: 10178587.1
(73) Proprietor: Paroc Group Oy, 00181 Helsinki (FI)
(72) Inventor: ÅSTRAND, Erik, FI-21600 Parainen (FI); WALLI, Bjarne, FI-21600 Parainen (FI)
(74) Representative: Turun Patenttitoimisto Oy
(86) International application number: PCT/FI2005/000554
(87) International publication number: WO 2006/070056

(56) References cited:
- WO-A-91/10626
- WO-A-2004/002913
- WO-A1-97/17305
- US-A- 4 356 017
- US-A- 4 433 992
- PATENT ABSTRACTS OF JAPAN vol. 015, no. 080 (C-0810), 25 February 1991 (1991-02-25) -& JP 02 302335 A (NITTO BOSEKI CO LTD), 14 December 1990 (1990-12-14)
- PATENT ABSTRACTS OF JAPAN vol. 018, no. 347 (C-1219), 30 June 1994 (1994-06-30) -& JP 06 087622 A (KAWASAKI STEEL CORP), 29 March 1994 (1994-03-29)
- DATABASE WPI Section Ch, Week 198748 Derwent Publications Ltd., London, GB; Class F01, AN 1987-155297 XP002373650 -& SE 452 150 B (ROCKWOOL AB) 16 November 1987 (1987-11-16)

## Description

The present invention relates to an arrangement and a method in the manufacture of mineral fibres according to the preamble of the claims below and an arrangement of fiberising rotors.

Mineral wool, such as rock wool, is made by melting suitable raw materials, for example diabase, limestone or slag in a melting furnace. The mineral melt obtained is discharged from the melting furnace in the form of a melt jet to a fiberising apparatus, where the melt is formed into mineral fibres. Normally a fiberising apparatus of the spinning machine type is used, which comprises a series of rotating fiberising rotors or spinning rotors, typically 3 to 4 rotors. Mineral melt from the melting furnace is directed toward the mantle surface of the first rotor where it gets hold of the rotor's mantle surface to a certain extent before it is thrown out as a cascade of drops against the mantle surface of the adjacent second rotor in the series. A part of the mineral melt gets then sufficient hold of the second rotor's mantle surface in order to be formed into fibres due to the effect of the centrifugal force. Another part of the mineral melt is thrown further against the mantle surface of the third rotor. In this way the mineral melt is "transported" as a jet of mineral melt drops or a drop cascade, successively from one rotor to the next one through the whole fiberising apparatus, at the same time as a part of the mineral melt is formed into mineral fibres. A binder may be applied on the formed mineral fibres, either during the fibre formation or after it.

The mineral fibres formed at the fiberising rotors are transported away from the fiberising apparatus by means of blowing off. The blowing off of mineral fibres can be arranged with so-called primary blow-off means, which have been placed at the peripheries of the rotors or with secondary blow-off means, which have been arranged at a distance from the fiberising apparatus. Typically the primary blow-off means are arranged around the periphery of the fiberising rotor, at the periphery of the fiberising rotor. Jets of blow-off air having a high velocity are arranged with the aid of this blow-off means closely over the periphery of the fiberising rotor. The primary blow-off means is normally formed as a uniform continuous slot or it can be divided with guide vanes into a plurality of slots.

The mineral fibres are transported from the fiberising apparatus through a collecting chamber towards a collecting member, which has been arranged in front of the fiberising apparatus. The collecting member can be, for example, a belt conveyor or a rotating drum.

The mineral fibres are usually collected as a thin fibre web, a so-called primary fibre web or a primary web. The primary fibre web is normally collected by a travelling perforated surface which forms the collecting surface of the collecting member. The velocity at which the collecting surface proceeds defines the surface weight of the collected primary fibre web if the fibre mass flow from the fiberising apparatus is constant. The higher the velocity of the collecting surface is, the thinner the collected primary fibre web becomes and the lower the surface weight of the web is. Generally, the aim is to collect as thin primary mineral fibre webs as possible. Snarls and tufts of mineral fibre are undesirable in the collected fibre web, as they lower the quality of the end product. It is naturally also an aim to avoid holes in the collected primary mineral fibre web.

When the amount of mineral fibres produced at the fiberising apparatus increases, the collecting velocity of the collecting member must be raised in the same degree, so that the surface weight of the collected primary web is kept constant and that the surface weight of the web does not become too high. The velocity of the collecting member is, however, restricted by other apparatuses later on in the process and can therefore not be raised at will. The post-processing of both thin as well as fast primary mineral fibre web has proved to be complicated among other things as the thin web easily breaks in transport and possible cross-lapping.

The structure of the collected primary web is greatly influenced by the conditions in the collecting chamber during travel of the mineral fibres from the fiberising apparatus to the collecting member. If the flow conditions in the collecting chamber are turbulent and back-eddies exist, the collected primary web easily becomes slightly nodular and inhomogeneous. The fiberising and collecting processes also become difficult to control when the produced amount of fibre increases.

It is important to optimise each subprocess in the manufacture of mineral wool so that a desired end product is achieved. It has proved difficult to manufacture and collect large amounts of fibre from a fiberising apparatus without degrading the structure of the collected primary web and the final mineral wool.

Attempts have been made to increase the production capacity in the manufacture of mineral wool by arranging several fiberising apparatuses side by side, so that all fiberising apparatuses have a melt feeding from a single melting furnace. When using several fiberising apparatuses side by side the collecting member collecting the produced fibres is made broader than usual. At a capacity increase of this kind it is thus necessary to replace considerable parts of the apparatuses in production lines. It is moreover complicated to provide an even melt feeding from a single melting furnace to several fiberising apparatuses, which easily results in overloading one or several fiberising apparatuses and at the same time reduced quality of the manufactured mineral wool.

There is number of different uses for mineral wool, for example as insulating material in various constructions. Depending on the target use, different requirements are set on the properties of manufactured mineral wool, on its strength, compressibility etc. The properties of mineral wool are influenced by the properties of the individual mineral fibres, in other words by the thickness, length, as well as space orientation of individual fibres in the mineral wool. These properties are among other things influenced by the conditions, which prevail when the mineral fibres are formed at the fiberising rotors. The used binder and/or other possible additives influence the end properties of mineral wool. Attempts have been made to optimise the properties of finished mineral wool by treating the collected primary web in various ways.

WO 2004/002913 discloses an apparatus and process for making mineral fibres. The apparatus comprises at least one fiberising rotor arranged on a horizontal axis and substantially annular air supply means arranged around the periphery of the rotor. The air supply means direct an air blast comprising a wall jet over the fiberising surface of the rotor. At least one binder supply duct leads to an outlet which is positioned to eject binder countercurrently into the air blast.

JP 02-302335 discloses an apparatus for making mineral fibres where a first and second high-speed air streams are applied from the first and second slit nozzles arranged at an interval therebetween to an inorganic melt, divided and thrown out from the peripheral surfaces of the fiberising rotors. An inorganic fibre product with a low shot content is obtained in high yield.

Prior art arrangements for making mineral fibres are also disclosed in WO 91/10626 and WO 97/17305.

Therefore the object of this invention is to provide a method and an apparatus in the manufacture of mineral wool fibres where the above-mentioned disadvantages are minimised.

The object is thus to achieve a method, whereby the properties of mineral fibres can be influenced when they are formed at surface of the fiberising rotor.

Another object of the present invention is to achieve an arrangement and an apparatus by means of which mineral wool fibres of a certain quality can be produced.

These objects are attained with a method and an apparatus having the characteristics presented in the characterising part of the enclosed independent claims.

A typical arrangement with a fiberising rotor according to the present invention is defined in claim 1. The arrangement comprises, inter alia,
- a rotating fiberising rotor arranged on a horizontal axis, which fiberising rotor has an active periphery at which the mineral fibres are mainly formed,
- a fibre blow-off means, which is arranged around the active periphery of the fiberising rotor, and which comprises a blow-off slot.

Furthermore, one or several additional nozzles are arranged inside the blow-off slot of the fibre blow-off means and a number of separate treatment nozzles are arranged directly on the outside of the blow-off means, at a maximum distance of 50 mm from the fibre blow-off means, whereby the additional nozzle or nozzles are fed with pressurised air and are inclined towards the surface of the fiberising rotor and the treatment nozzles are used for distributing binder, dust binding oil or water and inclined towards the area of the fiberising rotor where the fibre structure is formed from the melt that is located on the surface of the fiberising rotor.

A typical method according to the invention is defined in claim 6. It comprises following steps
- mineral melt is transported to a first rotating fiberising rotor in a fiberising apparatus comprising at least two fiberising rotors,
- mineral melt is thrown from the mantle surface of the first rotating rotor to the mantle surface of a second rotating rotor, and from there successively to the mantle surfaces of possible following rotors,
- mineral melt is formed to mineral fibres at the active peripheries of the rotating rotors,
- the mineral fibres formed are blown-off from the fiberising rotor of the fiberising apparatus towards a collecting member by means of fibre blow-off means arranged at the active peripheries of the rotors, which fibre blow-off means comprises a blow-off slot,
- binder is applied to the mineral fibres during their formation by means of a binder applying member arranged at the active peripheries of the rotors, and one or several additional nozzles are arranged inside the blow-off slot of the fibre blow-off means and a number of separate treatment nozzles are arranged directly on the outside, at the maximum distance of 50 mm, of the blow-off means, whereby the additional nozzle or nozzles are fed with pressurised air and are inclined towards the surface of the fiberising rotor and the treatment nozzles are used for distributing binder, dust binding oil or water and inclined towards the area of the fiberising rotor where the fibre structure is formed from the melt that is located on the surface of the fiberising rotor.

A typical apparatus according to the present invention comprises one or several arrangements with a fiberising rotor according to the present invention.

The active periphery of the fiberising rotor has in this connection been defined as that part of the fiberising rotor's surface i.e. the part of the periphery of the rotor where mineral fibres are formed while the rotor rotates from the mineral melt which is located on the surface of the rotor. Usually the fiberising rotors used have a substantially horizontal axis. Mineral fibres are generally defined as that weight fraction of the binderless fibre material which passes through a 32 µm sieve.

Now it has surprisingly been found that by arranging one or several additional nozzles in connection with the blow-off slot of the fibre blow-off means the blowing off can be controlled with greater accuracy at the periphery of the fiberising rotor and the blowing off can be adjusted to the conditions at the active periphery of the fiberising rotor. Adjusted blowing off makes it possible to better control the quality and/or quantity of the manufactured mineral fibres. In this manner the manufactured mineral fibres can be adjusted to meet the needs and requirements made by the final target use.

According to the invention an additional nozzle is arranged thus inside the blow-off slot or blow-off channel of the fibre blow-off means at the active periphery of a fiberising rotor. The blow-off slot or channel of the blow-off means is normally fed with air with an adjustable pressure within the region 0 - 60 kPa, typically within the region 20 - 40 kPa by means of one or several distribution channels. According to an embodiment mineral fibres are blown off with a blow-off means at a blow-off velocity of at least 80 - 330 m/s, preferably 100 - 300 m/s, typically 100 - 200 m/s. The fibre blow-off means is typically located in the immediate vicinity of the fiberising rotor, around and adjacent to the active periphery of the fiberising rotor. The blow-off means is normally formed as a collar fixed to a wall that concentrically surrounds the mantle surface of the fiberising rotor and thus it produces a wall jets over the mantle surface of the fiberising rotor, the so-called primary blowing off. The inner diameter of the blow-off means is normally essentially as large as the diameter of the associated fiberising rotor. Typically the diameters are identical but the inner diameter of the blow-off means can be in some cases 1 - 3 mm larger than the diameter of the associated fiberising rotor.

The height of blow-off slot of the blow-off means is typically 5 - 30 mm, preferably 7 - 22 mm, more preferably 10 - 15 mm over the surface of the fiberising rotor. The front side of the blow-off means, i.e. the side facing the collecting chamber, can be made of a plate in which round holes have been drilled next to each other. Preferably the entire active periphery is surrounded by the blow-off means. In a fiberising apparatus according to the present invention the entire length of the blow-off means is typically 60 - 80 %, preferably 65 - 75 % of the entire length of the total circumference of the fiberising apparatus.

According to an embodiment of the present invention the fibre blow-off means is divided into several blow-off slots with guide vanes, and an additional nozzle is arranged in connection with each blow-off slot of the blow-off means. The additional nozzles can be arranged in the distribution channels of the blow-off slots, for example, behind the discharge opening of the blow-off slots. There is no need to arrange additional nozzles in connection with each blow-off slot, they can rather be arranged e.g. every second or every third slot as needed.

According to an embodiment of the invention the cross section of the additional nozzle's discharge opening is normally round and its diameter is normally 1 - 5 mm. The additional nozzles can also be formed by another geometry and their size can vary. The discharge opening of the additional nozzles can for example resemble a long narrow slot, the length of which can be 5 - 10 mm and the height 0.5 - 1 mm. If the additional nozzles are slot-formed they can be arranged in the blow-off slot so that they are close to the surface of the fiberising rotor, in the immediate vicinity thereof.

The size of the additional nozzle can depend on its position at the circumference of the fiberising rotor, so that the size of the additional nozzles can differ depending on their position at the circumference of the fiberising rotor. All the additional nozzles do not have to be alike but their size and geometry can differ from each other. In this case there are at least two additional nozzles with different physical configurations at a fiberising rotor. According to the possible embodiment all the additional nozzles at one fiberising rotor can be alike, however, additional nozzles at different fiberising rotors in a fiberising apparatus can be different, i.e. differ from each other.

The additional nozzle or nozzles are usually in contact with a source for pressurised air through a channel or several parallel channels and they are fed with pressurised air through a channel or several channels in parallel. According to the present invention the additional nozzles are fed with pressurised air, the strength of which can be varied within the region 0 - 7 bar, typically within the region 1 - 5 bar, more typically within the region 3 - 5 bar. With the aid of the additional nozzles it is possible to make fine adjustments to the blow-off strength or direction of the blowing off by means of which fibres are blown off from the surface of the fiberising rotor. The nozzles can, for example, be located so that they have a tangential component, which is directed in the same direction as the guide vanes arranged in the blow-off means. If the guide vanes guide the blow-off air, for example, in an angle 30° tangentially in the rotating direction of the fiberising rotor, the blow-off direction of the nozzle can be in an angle 15° - 30° tangentially in the rotating direction. The additional nozzle or nozzles are arranged so that they are inclined towards the surface of the fiberising rotor.

According to one embodiment the additional or treatment nozzle or nozzles can also be of the air/liquid type. They can then be fed with binder or other additives, which can be dispersed in the pressurised air. This makes it possible to feed the binder in the gas flow, which blows the mineral fibres off the surface of the fiberising rotor. In this manner a better distribution and dispersion of binder is achieved to the formed mineral fibres, as the fibres come simultaneously in contact with the binder as they are formed.

The additional nozzles are defined as active when they distribute a medium, such as gas or liquid. The active number of additional nozzles can be varied according to need and/or the media used. This entails that even if an additional nozzle is arranged in connection with every blow-off slot of the blow-off means only a part of them are active during a specific production situation. If the periphery of the fiberising rotor is divided into sectors, which are controlled independently of each other, the active amount of additional nozzles can vary from one sector to the next. According to the present invention a number of the treatment nozzles are arranged directly on the outside of the blow-off means. The treatment nozzles are arranged either so that they are in direct contact with the fibre blow-off means, with its blow-off slot, or so that they are arranged in the immediate vicinity thereof, at a maximum distance of 50 mm, typically 10 - 40 mm, more typically 15 - 30 mm, from the fibre blow-off means. According to the invention there is no uniform nozzle collar or distribution channel for binder on the outer side of the blow-off means but the treatment nozzles are arranged on slender nozzle arms. By the outer side of the blow-off means that side is thus meant which is located further away from the fiberising rotor. The treatment nozzles are then usually located at a distance from the surface of the fiberising rotor, which distance is equal to or very close to the height of the fibre blow-off means. The number of treatment nozzles can be equal to the number of blow-off slots in the blow-off means. Typically the number of active treatment nozzles during manufacture is smaller than the number of active blow-off slots. The active number of treatment nozzles during manufacture can be varied according to need.

The treatment nozzles are of the air/liquid type and they are used for distributing binder, dust binding oil, water.

According to a preferred embodiment of the present invention the main part of the used binder is distributed through the treatment nozzles. The treatment nozzles are fed through a channel or several parallel channels. They can be fed with a treatment agent, such as binder, as a liquid or dispersed in air, whereby the amount of treatment agent per kg of manufactured fibres is for example 0.2 - 0.6 litres.

The treatment nozzles are inclined towards the area of the fiberising rotor where the fibre structure is formed from the melt that is located on the surface of the fiberising rotor. The distribution velocity of the nozzles can be varied. Typically the total amount of air to be distributed through the treatment nozzles can vary between 0 - 0.5 Nm³/kg of manufactured fibres, for example. The blowing off by the treatment nozzles can also be given a clearly transporting role.

According to the invention the treatment nozzles are located considerably closer to the fiberising rotor surface than before. This contributes to an improved distribution and dispersion of the treatment agent regarding the formed mineral fibres. According to an embodiment of the present invention a first amount of treatment nozzles is fed with a first binder and a second amount with a second binder. According to another embodiment every second treatment nozzle is fed with a first binder and every second with a second binder. With every second treatment nozzle, for example, inorganic binder can be fed and organic binder with every second, in other words inorganic binder can be fed with half of the treatment nozzles.

The treatment nozzles can be run in the same manner at two or more fiberising rotors in a fiberising apparatus, i.e. they are fed with the same type of binder and the used blow-off velocity and direction are the same. For example, the treatment nozzles at the first and third as well as the second and fourth fiberising rotor can be driven identically in relation to each other. In other words, the treatment nozzles of the first and third fiberising rotor form a periphery and the treatment nozzles of the second and fourth fiberising rotors another periphery. The first and fourth and the second and third fiberising rotors may as well form two separate peripheries.

According to an embodiment of the present invention a part of the used binder is fed through the additional nozzles and a part through the treatment nozzles. It is also possible to feed two different binders simultaneously on the formed mineral fibres by feeding the first binder through the additional nozzles and the second binder through the treatment nozzles. According to another embodiment of the present invention a first binder is fed by means of a first group of treatment nozzles and a second binder by means of a second group of treatment nozzles. The treatment nozzles can be freely arranged into groups as needed, for example so that the treatment nozzles at the first fiberising rotor form a first group and the treatment nozzles at the rest of the fiberising rotors form another group.

A collar can be arranged at a fiberising rotor, which collar surrounds the active periphery of the fiberising rotor. In this manner an open profile is formed, which gives a possibility to free inflow for gas, such as air, between the fiberising wheels. The collar also gives space for other treatment means, such as treatment nozzles, as well as, other means for the assembly of product specific fibre filament, for example outer guide vanes. The length of the collar as seen from behind can be 200 - 700 mm, typically 200 - 500 mm.

The fiberising rotor can be equipped with a guide edge which gives the air that is blown forward in the slot an increasing velocity forward having its maximum velocity at the discharge opening.

Some preferred embodiments of the invention are described in more detail below with reference to the enclosed figures, in which
Figure 1 schematically shows a cross section of a part of the arrangement according to the present invention, and
Figure 2 shows schematically an embodiment according to the present invention.

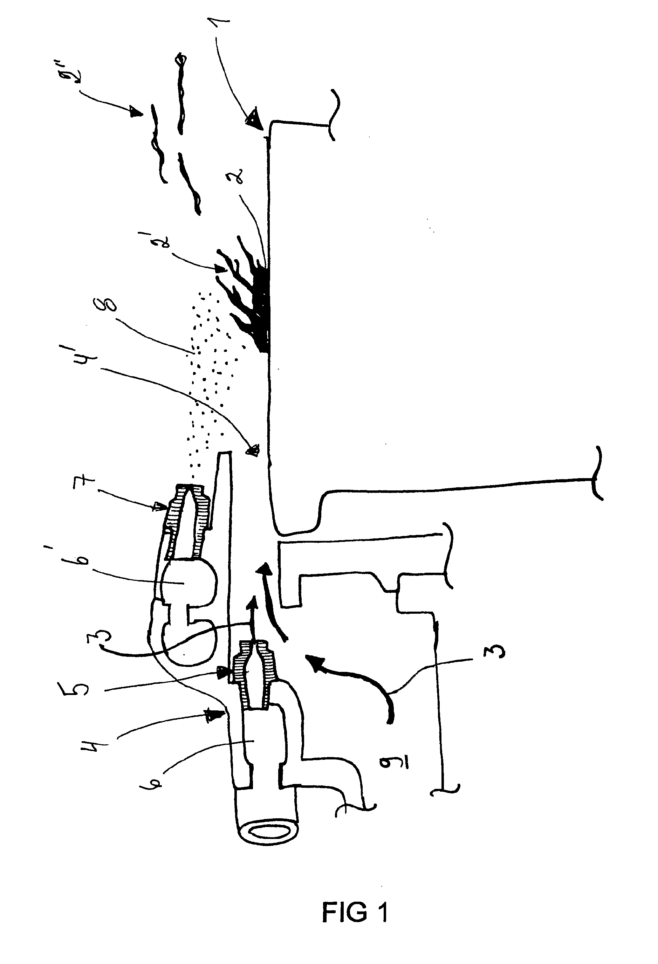

In figure 1 a cross section of a part of the arrangement according to the present invention is schematically shown. In figure 1 there is schematically shown a part of the fiberising rotor 1 with a ring of mineral melt 2 which is transformed from the mantle surface of the rotor to separate mineral fibres 2', which are blown off from the rotor 1 and form a so-called fibre filaments 2", which are constituted from a number of separate fibres. Fibre filaments can be considered to resemble a thread or a wire, which has been created when two or several fibres have become intertwined. The degree of twining in a fibre filament depends among other things on the blow-off velocity. A high blowing off velocity normally causes the separate fibres to be shorter, but they are more strongly bound to each other, whereby the final product receives better strength properties.

During their travel through the collecting chamber mineral fibre filaments 2" form fibre flocks, the structure of which is influenced by properties such as blowing off and medium flows around and/or in front of the fiberising rotors.

Mineral fibres 2' are formed and blown off primarily by means of an air jet 3, indicated by arrows, from a blow-off slot 4' of the blow-off means 4. In connection with the blow-off slot 4' an additional nozzle 5 is arranged, which is fed with pressurised air from a channel 6. The additional nozzle 5 is arranged in a distribution channel 9 of the blow-off slot 4' behind a discharge opening of the blow-off slot 4'. The arrows in the figure symbolise air that is distributed by the distribution channel 9 to the blow-off slot 4'. On the blow-off means 4 a treatment nozzle 7 is arranged by means of which a forerun or an atomised binder 8 is distributed on the formed mineral fibres 2' and the mineral fibre filaments. The treatment nozzle 7 is fed with binder from the channel 6'. By means of the channel 6' every second treatment nozzle, for example, can be fed with another treatment agent.

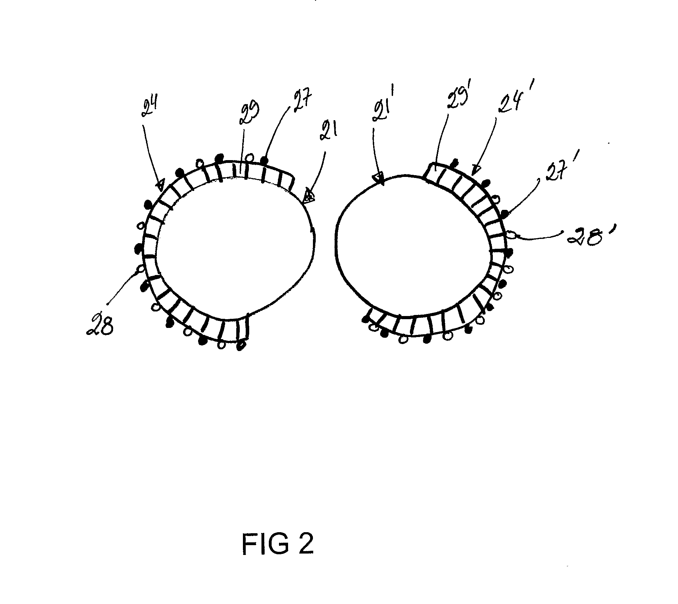

In figure 2 two fiberising rotors 21, 21' are shown, the active peripheries of which are surrounded by the blow-off means 24, 24'. The blow-off means 24, 24' comprise a number of blow-off slots 29, 29'. On the outer sides of the blow-off slots treatment nozzles 27, 27' are arranged for distributing the treatment agent in liquid form and additive nozzles 28, 28' for distributing of a supplementary treatment agent, another liquid and/or air.

The present invention is particularly well suited to be used together with a fiberising apparatus disclosed in the patent application FI20011561. This fiberising apparatus has a high fibre forming capacity, which easily overloads the other apparatuses in the fibre manufacture process. It is possible with the aid of the present invention to make the manufactured fibres to accumulate more evenly on the used collecting members, as well as, get the fibres treated in a desired manner.

## Claims

1. Arrangement in the manufacture of mineral fibres, which arrangement comprises
- a rotating fiberising rotor (1, 21, 21') arranged on a horizontal axis, which fiberising rotor (1, 21, 21') has an active periphery at which the mineral fibres (2') are mainly formed,
- a fibre blow-off means (4, 24, 24'), which is arranged around the active periphery of the fiberising rotor (4, 24, 24'), and which comprises a blow-off slot (4', 29, 29'), **characterised in that**,
one or several additional nozzles (5) are arranged inside the blow-off slot (4', 29, 29') of the fibre blow-off means (4, 24, 24') and a number of separate treatment nozzles (7, 27, 27') are arranged directly on the outside of the blow-off means (4, 24, 24'), at a maximum distance of 50 mm from the fibre blow-off means, whereby the additional nozzle or nozzles are fed with pressurised air and are inclined towards the surface of the fiberising rotor (1, 21, 21') and the treatment nozzles (7, 27, 27') are used for distributing binder, dust binding oil or water and inclined towards the area of the fiberising rotor (1, 21, 21') where the fibre structure is formed from the melt (2) that is located on the surface of the fiberising rotor (1, 21, 21').

2. Arrangement according to claim 1, **characterised in that** the fibre blow-off means (4, 24, 24') is divided into several blow-off slots (4', 29, 29') and that an additional nozzle (5) is arranged in connection with each blow-off slot (4', 29, 29').

3. Arrangement according to claim 1, **characterised in that** the cross section of the additional nozzle's (5) discharge opening is round and has a diameter of 1 - 5 mm.

4. Arrangement according to claim 1, **characterised in that** the additional nozzle or nozzles (5) are in contact with a source for pressurised air through a channel (6) or several parallel channels.

5. Fiberising apparatus, which comprises one or several arrangements according to claim 1.

6. Method in the manufacture of mineral fibres, in which method
- mineral melt is led to a first rotating fiberising rotor in a fiberising apparatus comprising at least two fiberising rotors,
- mineral melt is thrown from the mantle surface of the first rotating rotor to the mantle surface of a second rotating rotor, and from there successively to the mantle surfaces of possible following rotors,
- mineral melt is formed to mineral fibres at the active peripheries of the rotating fiberising rotors (1, 21, 21'),
- the formed mineral fibres (2') are blown-off from the fiberising rotors (1, 21, 21') of the fiberising apparatus towards a collecting member by means of fibre blow-off means (4, 24, 24') arranged at the active peripheries of the rotors, which fibre blow-off means comprises a blow-off slot,
- binder is applied onto the mineral fibres during their formation by means of a binder applying member arranged at the active peripheries of the rotors, **characterised in that**,
one or several additional nozzles (5) are arranged inside the blow-off slot (4', 29, 29') of the fibre blow-off means (4, 24, 24') and a number of separate treatment nozzles (7, 27, 27') are arranged directly on the outside, at the maximum distance of 50 mm, of the blow-off means (4, 24, 24'), whereby the additional nozzle or nozzles are fed with pressurised air and are inclined towards the surface of the fiberising rotor (1, 21, 21') and the treatment nozzles (7, 27, 27') are used for distributing binder, dust binding oil or water and inclined towards the area of the fiberising rotor where the fibre structure is formed from the melt (2) that is located on the surface of the fiberising rotor.

7. Method according to claim 6, **characterised in that** an additional nozzle (5) is arranged in connection with every blow-off slot (4', 29, 29') of the fibre blow-off means (4, 24, 24').

8. Method according to claim 6, **characterised in that** the additional nozzle or nozzles (5) are fed with pressurised air from a source for pressurised air through a channel or several channels (6) in parallel.

9. Method according to claim 6, **characterised in that** a first binder is fed by means of a first group of treatment nozzles (7, 27, 27') and that a second binder is fed by means of a second group of treatment nozzles (7, 27, 27').

## Patentansprüche

1. Anordnung bei der Herstellung von Mineralwolle, wobei die Anordnung umfasst
- einen rotierenden zerfasernden Rotor (1, 21, 21'), welcher auf einer horizontalen Achse angeordnet ist, wobei der zerfasernde Rotor (1, 21, 21') eine aktive Peripherie aufweist, an welcher die Mineralfasern (2') hauptsächlich ausgebildet werden,
- ein Faserabblasemittel (4, 24, 24'), welches um die aktive Peripherie des zerfasernden Rotors (4, 24, 24') angebracht ist, und welches einen Abblaseschlitz (4', 29, 29') umfasst,
**dadurch gekennzeichnet, dass**
eine oder mehrere zusätzliche Düsen (5) in dem Abblaseschlitz (4', 29, 29') des Faserabblasemittels (4, 24, 24') angebracht sind und eine Anzahl von separaten Bearbeitungsdüsen (7, 27, 27') direkt außerhalb des Abblasemittels (4, 24, 24') in einem maximalen Abstand von 50 mm von dem Faserabblasemittel angebracht ist, wobei die zusätzliche Düse oder zusätzlichen Düsen mit Druckluft gespeist sind und zur Oberfläche des zerfasernden Rotors (1, 21, 21') hin geneigt sind und die Bearbeitungsdüsen (7, 27, 27') zum Verteilen von Bindemittel, staubbindendem Öl oder Wasser eingesetzt werden und zur Fläche des zerfasernden Rotors (1, 21, 21') hin geneigt sind, wo die Faserstruktur aus der Schmelze (2) gebildet wird, welche sich auf der Oberfläche des zerfasernden Rotors (1, 21, 21') befindet.

2. Anordnung gemäß Anspruch 1, **dadurch gekennzeichnet, dass** das Faserabblasemittel (4, 24, 24') in mehrere Abblaseschlitze (4', 29, 29') unterteilt ist und dass in Verbindung mit jedem Abblaseschlitz (4', 29, 29') eine zusätzliche Düse (5) angebracht ist.

3. Anordnung gemäß Anspruch 1, **dadurch gekennzeichnet, dass** der Querschnitt der Austrittsöffnung der zusätzlichen Düse (5) rund ist und einen Durchmesser von 1 - 5 mm aufweist.

4. Anordnung gemäß Anspruch 1, **dadurch gekennzeichnet, dass** die zusätzliche Düse oder zusätzlichen Düsen (5) durch einen Kanal (6) oder mehrere parallele Kanäle mit einer Druckluftquelle in Kontakt sind.

5. Zerfasernde Vorrichtung, welche eine oder mehrere Anordnungen gemäß Anspruch 1 umfasst.

6. Verfahren bei der Herstellung von Mineralfasern, in welchem
- Mineralschmelze zu einem ersten rotierenden zerfasernden Rotor in einer zerfasernden Vorrichtung geführt wird, welche zumindest zwei zerfasernde Rotoren umfasst,
- Mineralschmelze von der Manteloberfläche des ersten rotierenden Rotors zu der Mantelfläche eines zweiten rotierenden Rotors und von dort sukzessive zu den Manteloberflächen möglicher folgender Rotoren geschleudert wird,
- Mineralschmelze an den aktiven Peripherien der rotierenden zerfasernden Rotoren (1, 21, 21') zu Mineralfasern ausgebildet wird,
- die ausgebildeten Mineralfasern (2') von den zerfasernden Rotoren (1, 21, 21') der zerfasernden Vorrichtung zu einem Auffangelement hin durch Faserabblasemittel (4, 24, 24') abgeblasen werden, welche an den aktiven Peripherien der Rotoren angebracht sind und welche einen Abblaseschlitz aufweisen,
- durch ein Bindemittelauftragungselement, welches an den aktiven Peripherien der Rotoren angebracht ist, Bindemittel auf die Mineralfasern während deren Ausbildung aufgetragen wird,
**dadurch gekennzeichnet, dass**
eine oder mehrere zusätzliche Düsen (5) in dem Abblaseschlitz (4', 29, 29') des Faserabblasemittels (4, 24, 24') angebracht sind und eine Anzahl von separaten Bearbeitungsdüsen (7, 27, 27') direkt außerhalb des Abblasemittels (4, 24, 24') in einer maximalen Entfernung von 50 mm angebracht sind, wobei die zusätzliche Düse oder zusätzlichen Düsen mit Druckluft gespeist sind und zu der Oberfläche des zerfasernden Rotors (1, 21, 21') hin geneigt sind und die Bearbeitungsdüsen (7, 27, 27') zum Verteilen von Bindemittel, staubbindendem Öl oder Wasser eingesetzt werden und zur Fläche des zerfasernden Rotors hin geneigt sind, wo die Faserstruktur aus der Schmelze (2) ausgebildet wird, welche sich auf der Oberfläche des zerfasernden Rotors befindet.

7. Verfahren gemäß Anspruch 6, **dadurch gekennzeichnet, dass** eine zusätzliche Düse (5) in Verbindung mit jedem Abblaseschlitz (4', 29, 29') des Faserabblasemittels (4, 24, 24') angebracht ist.

8. Verfahren gemäß Anspruch 6, **dadurch gekennzeichnet, dass** die zusätzliche Düse oder zusätzlichen Düsen (5) durch einen Kanal oder mehrere parallele Kanäle (6) mit Druckluft von einer Druckluftquelle gespeist werden.

9. Verfahren gemäß Anspruch 6, **dadurch gekennzeichnet, dass** ein erstes Bindemittel durch eine erste Gruppe von Bearbeitungsdüsen (7, 27, 27') gespeist wird und dass ein zweites Bindemittel durch eine zweite Gruppe von Bearbeitungsdüsen (7, 27, 27') gespeist wird.

## Revendications

1. Dispositif de production de fibres minérales, lequel dispositif comprend
- un rotor de fibrage rotatif (1, 21, 21') disposé sur un axe horizontal, lequel rotor de fibrage (1, 21, 21') présente une périphérie active au niveau de laquelle les fibres minérales (2') sont principalement formées.
- un moyen de soufflage de fibres (4, 24, 24') qui est disposé autour de la périphérie active du rotor de fibrage (4, 24, 24') et qui comprend une fente de soufflage (4', 29, 29'),
**caractérisé en ce que**
une ou plusieurs buses supplémentaires (5) sont disposées à l'intérieur de la fente de soufflage (4', 29, 29') du moyen de soufflage de fibres (4, 24, 24') et un nombre de buses de traitement séparées (7, 27, 27') sont disposées directement du côté extérieur du moyen de soufflage (4, 24, 24'), à une distance maximale de 50 mm du moyen de soufflage de fibres, de sorte que la ou les buses supplémentaires ou les buses sont alimentées en air sous pression et sont inclinées vers la surface du rotor de fibrage (1, 21, 21') et les buses de traitement (7, 27, 27') sont utilisées pour distribuer du liant, de l'huile ou de l'eau de liaison de poussières et sont inclinées vers la zone du rotor de fibrage (1, 21, 21') où la structure fibreuse est formée à partir de la matière fondue (2) qui se trouve sur la surface du rotor de fibrage (1,21, 21').

2. Dispositif selon la revendication 1, **caractérisé en ce que** le moyen de soufflage de fibres (4, 24, 24') est divisé en plusieurs fentes de soufflage (4", 29, 29") et **en ce qu'**une buse supplémentaire (5) est disposée en liaison avec chaque fente de soufflage (4', 29, 29').

3. Dispositif selon la revendication 1, **caractérisé en ce que** la section transversale de l'orifice d'évacuation de la buse supplémentaire (5) est ronde et a un diamètre de 1 à 5 mm.

4. Dispositif selon la revendication 1, **caractérisé en ce que** la ou les buses supplémentaires (5) sont en contact avec une source d'air sous pression par le biais d'un conduit (6) ou de plusieurs conduits parallèles.

5. Appareil de fibrage, qui comprend un ou plusieurs dispositifs selon la revendication 1.

6. Procédé de production de fibres minérales, procédé dans lequel
- une matière minérale fondue est amenée à un premier rotor de fibrage rotatif dans un appareil de fibrage comprenant au moins deux rotors de fibrage,
- une matière minérale fondue est projetée de la surface d'enveloppe du premier rotor rotatif à la surface d'enveloppe du deuxième rotor rotatif, puis successivement sur les surfaces d'enveloppe d'éventuels rotors suivants,
- la matière minérale fondue est mise en forme pour obtenir des fibres minérales sur la périphérie active des rotors de fibrage rotatif (1, 21, 21'),
- les fibres minérales formées (2') sont soufflées des rotors de fibrage (1, 21, 21') de l'appareil de fibration vers un élément collecteur à l'aide du moyen de soufflage de fibres (4, 24, 24') disposé sur la périphérie active des rotors, lequel moyen de soufflage de fibres comporte une fente de soufflage,
- du liant est appliqué sur les fibres minérales au cours de leur formation à l'aide d'un élément d'application de liant disposé sur la périphérie active des rotors, **caractérisé en ce que**
une ou plusieurs buses (5) supplémentaires sont disposées à l'intérieur de la fente de soufflage (4', 29, 29') du moyen de soufflage de fibres (4, 24, 24') et un certain nombre de buses de traitement (7, 27, 27') séparées sont disposées directement à l'extérieur, à la distance maximale de 50 mm, du moyen de soufflage (4, 24, 24'), de sorte que la ou les buses sont alimentées en air sous pression et sont inclinées vers la surface du rotor de fibrage (1, 21, 21') et les buses de traitement (7, 27, 27') sont utilisées pour distribuer du liant, de l'huile ou de l'eau de liaison de poussières et sont inclinées vers la zone du rotor de fibrage où la structure fibreuse est formée à partir de la matière fondue (2) qui se trouve sur la surface du rotor de fibrage.

7. Procédé selon la revendication 6, **caractérisé en ce qu'**une buse (5) supplémentaire est disposée en liaison avec chaque fente de soufflage (4', 29, 29') du moyen de soufflage de fibres (4, 24, 24').

8. Procédé selon la revendication 6, **caractérisé en ce que** la ou les buses (5) supplémentaires sont alimentées en air sous pression depuis une source d'air sous pression par le biais d'un conduit ou de plusieurs conduits (6) disposés en parallèle.

9. Procédé selon la revendication 6, **caractérisé en ce qu'**un premier liant est introduit à l'aide d'un premier groupe de buses de traitement (7, 27, 27') et **en ce qu'**un second liant est introduit à l'aide d'un deuxième groupe de buses de traitement (7, 27, 27').
